# EUROPEAN PATENT APPLICATION

(11) **EP 4 462 347 A1**
(43) Date of publication of application: **13.11.2024**
(21) Application number: 23837539.8
(22) Date of filing: 15.11.2023
(51) Int. Cl.: G06Q 50/20, G06Q 50/10, G06N 20/00, G06N 3/08, G09B 5/08

(54) **METHOD FOR ANALYZING LEARNING CHARACTERISTICS AND ADJUSTING LEARNING ENVIRONMENT BY USING ARTIFICIAL INTELLIGENCE, AND SERVICE PROVIDING SERVER USED FOR SAME**

(30) Priority: 24.03.2023 KR 20230038704
(71) Applicant: Kim, Sang Won, Busan 46219 (KR); Kim, Hyun Ho, Seoul 06196 (KR)
(72) Inventor: Kim, Sang Won, Busan 46219 (KR); Kim, Hyun Ho, Seoul 06196 (KR)
(74) Representative: Sander, Rolf
(86) International application number: PCT/KR2023/018330
(87) International publication number: WO 2024/204944

(57) **Abstract**

Disclosed are a learning characteristics analysis and learning environment adjustment method using artificial intelligence and a service providing server used therein. The present invention is implemented through a process of transmitting learning contents stored in a first storage area among a plurality of storage areas to a learner terminal, receiving response information of a learner on the learning contents from the learner terminal, determining whether to execute movement and storage of the learning contents from the first storage area to a second storage area based on the response information of the learner, and analyzing learning characteristics of the learner based on the response information of the learner. According to the present invention, it is possible to not only enable precise analysis of individual learning characteristics of learners, such as learning ability and a level of learning achievement during repetitive learning, through the artificial intelligence, but also allow learning environment of the learners to be actively set by reflecting the individual learning characteristics of the learners analyzed through artificial intelligence.

## Description

### [Technical Field]

The present invention relates to a learning characteristics analysis and learning environment adjustment method using artificial intelligence and a service providing server used therein, and more particularly, to a learning characteristics analysis and learning environment adjustment method using artificial intelligence that not only enables precise analysis of individual learning characteristics of learners, such as learning ability and a level of learning achievement during repetitive learning, through the artificial intelligence, but also allows learning environment of the learners to be actively set by reflecting the individual learning characteristics of the learners analyzed through artificial intelligence, and a service providing server used therein.

### [Background Art]

The Ebbinghaus forgetting curve is empirical data that shows how important it is to review learned contents, and it is widely known that periodic repetitive learning is more effective than anything else for long-term memory of learned contents.

However, it is difficult to successfully carry out periodic repetition of learning contents due to various problems such as learner's lack of learning conation and ability to execute.

In addition, for successful long-term memory of learning contents, the amount of repeated learning contents and the repeated learning cycle should be set differently according to individual capabilities of learners. However, there is a realistic problem that it is very difficult for learners to decide on their own the repetitive learning amount and the repetitive learning cycle that is right for these learners.

Meanwhile, a method of supporting long-term memory of learning contents to solve this problem has been proposed through Korean Patent No. 10-2405520.

However, even in this case, there are still technical limitations in that a learner may not directly participate in setting up learning environment, such as the repetitive learning cycle and repetitive learning amount, and individual learning characteristics of learners, such as learning ability and a level of learning achievement during repetitive learning, may not be analyzed, and the learning environment may not be actively set by reflecting the individual learning characteristics of learners, and the like.

### [Disclosure]

### [Technical Problem]

It is an object of the present invention to provide a learning characteristics analysis and learning environment adjustment method using artificial intelligence that not only enables precise analysis of individual learning characteristics of learners, such as learning ability and a level of learning achievement during repetitive learning, through the artificial intelligence, but also allows learning environment of the learners to be actively set by reflecting the individual learning characteristics of the learners analyzed through artificial intelligence, and a service providing server used therein.

The problem to be solved by the present invention is not limited to the problems mentioned, and includes other technical problems that can be clearly understood by those skilled in the art from the following description.

### [Technical Solution]

To achieve the above objects, in an aspect of the present invention, a learning characteristics analysis and learning environment adjustment method using artificial intelligence includes: (a) transmitting, by a service providing server, learning contents stored in a first storage area among a plurality of storage areas to a learner terminal; (b) receiving, by the service providing server, response information of a learner on the learning contents from the learner terminal; (c) determining, by the service providing server, whether to execute movement and storage of the learning contents from the first storage area to a second storage area based on the response information of the learner; and (d) analyzing, by the service providing server, learning characteristics of the learner based on the response information of the learner.

The learning characteristics analysis and learning environment adjustment method may further include (e) adjusting, by the service providing server, at least one of repetitive learning cycle of the learner and a one-time repetitive learning amount based on a result of analyzing the learning characteristics of the learner.

In another aspect of the present invention, a service providing server includes: a transmitting unit that transmits learning contents stored in a first storage area among a plurality of storage areas to a learner terminal; a receiving unit that receives response information of a learner on the learning contents from the learner terminal; and a calculation unit that allows the service providing server to analyze learning characteristics of the learner based on the response information of the learner.

Preferably, the calculation unit may adjust at least one of repetitive learning cycle of the learner and a one-time repetitive learning amount based on a result of analyzing the learning characteristics of the learner.

### [Advantageous Effects]

According to the present invention, it is possible to not only enable precise analysis of individual learning characteristics of learners, such as learning ability and a level of learning achievement during repetitive learning, through the artificial intelligence, but also allow learning environment of the learners to be actively set by reflecting the individual learning characteristics of the learners analyzed through artificial intelligence.

The effects of the present invention are not limited to the effects mentioned, and include other effects that can be clearly understood by those skilled in the art from the following description.

### [Brief Description of the Drawings]

FIG. 1 is a configuration diagram of a learning characteristics analysis and learning environment adjustment system using artificial intelligence according to an embodiment of the present invention.
FIG. 2 is a functional block diagram illustrating a structure of a service providing server executing the learning characteristics analysis and learning environment adjustment method using artificial intelligence according to an embodiment of the present invention.
FIG. 3 is a signal flow diagram illustrating a process of executing the learning characteristics analysis and learning environment adjustment method using artificial intelligence according to an embodiment of the present invention.
FIG. 4 is a procedure flowchart illustrating a detailed process of a learning characteristics analysis method using artificial intelligence according to an embodiment of the present invention.

### [Best Mode]

Hereinafter, exemplary embodiments of the present disclosure will be described in more detail with reference to the accompanying drawings. It is to be noted that throughout the accompanying drawings, the same components are denoted by the same reference numerals. In addition, a detailed description for the well-known functions and configurations that may unnecessarily make the gist of the present invention unclear will be omitted.

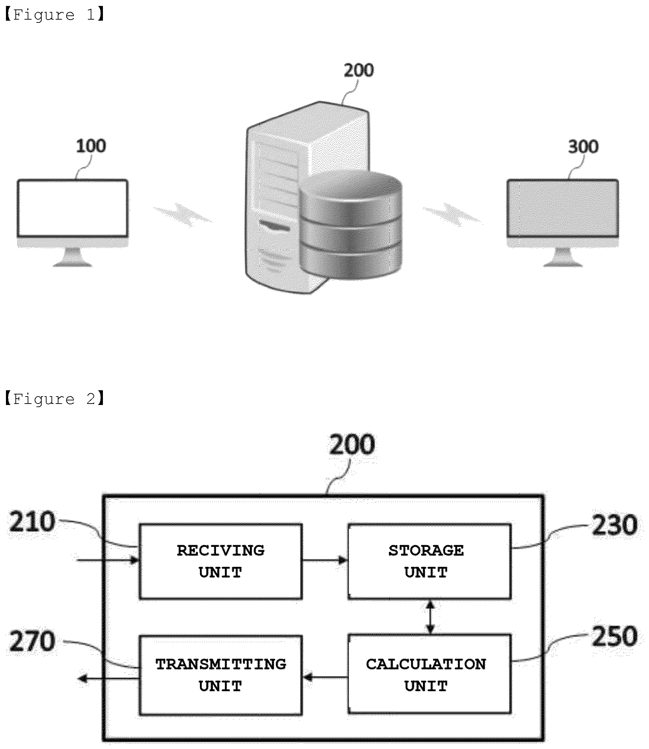

FIG. 1 is a configuration diagram of a learning characteristics analysis and learning environment adjustment system using artificial intelligence according to an embodiment of the present invention. Referring to FIG. 1, the learning characteristics analysis and learning environment adjustment system using artificial intelligence according to an embodiment of the present invention includes a learner terminal 100 and a service providing server 200, and may further include a manager terminal 300.

The learner terminal 100 is a wireless communication terminal such as a PC or a smart phone owned by a learner who uses the learning characteristic analysis and learning environment adjustment service using artificial intelligence according to the present invention. Such a learner terminal 100 may be installed with predetermined application programs for a learner required to use the learning characteristics analysis and learning environment adjustment service using artificial intelligence according to the prevent invention.

The service providing server 200 is a server installed and operated by a business operator that provides the learning characteristic analysis and learning environment adjustment services using artificial intelligence according to the present invention, and the service providing server 200 sequentially transmits learning contents stored in a first storage area among a plurality of storage areas to the learner terminal 100, receives response information of a learner on the learning contents from the learner terminal 100, determines whether to execute movement and storage of the learning contents from the first storage area to the second storage area based on the response information of the learner, analyzes the learning characteristics of the learner based on the response information of the learner, and adjusts at least one of a repetitive learning cycle of the learner and a one-time repetitive learning amount based on the results of analyzing the learning characteristics of the learner.

The manager terminal 300 is a wireless communication terminal such as a PC or a smart phone owned by a manager such as a teacher or instructor who manages learning of a learner, and the manager terminal 300 may be installed with application programs for a manager required to use the learning characteristic analysis and learning environment adjustment service.

Meanwhile, the service providing server 200 is configured to be able to communicate with the learner terminal 100 and the manager terminal 300 through a communication network. The communication network provides a connection path so that the service providing server 200, the learner terminal 100, and the manager terminal 300 may be connected to each other and then transmit and receive packet data.

Examples of the communication networks may include wired networks such as Local Area Networks (LANs), Wide Area Networks (WANs), Metropolitan Area Networks (MANs), and Integrated Service Digital Networks (ISDNs), or wireless networks such as wireless LANs, CDMA, Bluetooth, and satellite communications, but the scope of the present invention is not limited thereto.

In addition, the service providing server 200 may provide an application (App) or web environment in which the service according to the present invention is implemented.

The service provided by the service providing server 200 may be provided through an application installed on the learner terminal 100, and the application may mean application programs such as an app executed on a mobile terminal (smart phone).

FIG. 2 is a functional block diagram illustrating a structure of the service providing server 200 executing the learning characteristics analysis and learning environment adjustment method using artificial intelligence according to an embodiment of the present invention. Referring to FIG. 2, the service providing server 200 executing a learning characteristics analysis and learning environment adjustment method using artificial intelligence according to an embodiment of the present invention includes a receiving unit 210, a storage unit 230, a calculation unit 250, and a transmitting unit 270.

The receiving unit 210 of the service providing server 200 may receive learning object category selection information and response information for learning contents from the learner terminal 100, and receive learning contents for each category from the manager terminal 300.

The calculation unit 250 of the service providing server 200 determines whether to execute movement and storage of the learning contents from the first storage area to the second storage area based on the response information of the learner, analyzes the learning characteristics of the learner based on the response information of the learner, and adjusts at least one of the repetitive learning cycle of the learner and the one-time repetitive learning amount based on the results of analyzing the learning characteristics of the learner.

The learning contents for each learning object category are stored in a common storage space of the storage unit 230 of the service providing server 200, individual storage spaces allocated to accounts of each learner include a plurality of storage areas, and the transmitting unit 270 of the service providing server 200 sequentially transmits the learning contents stored in the plurality of storage areas provided in the individual storage spaces of the learners to the learner terminal 100.

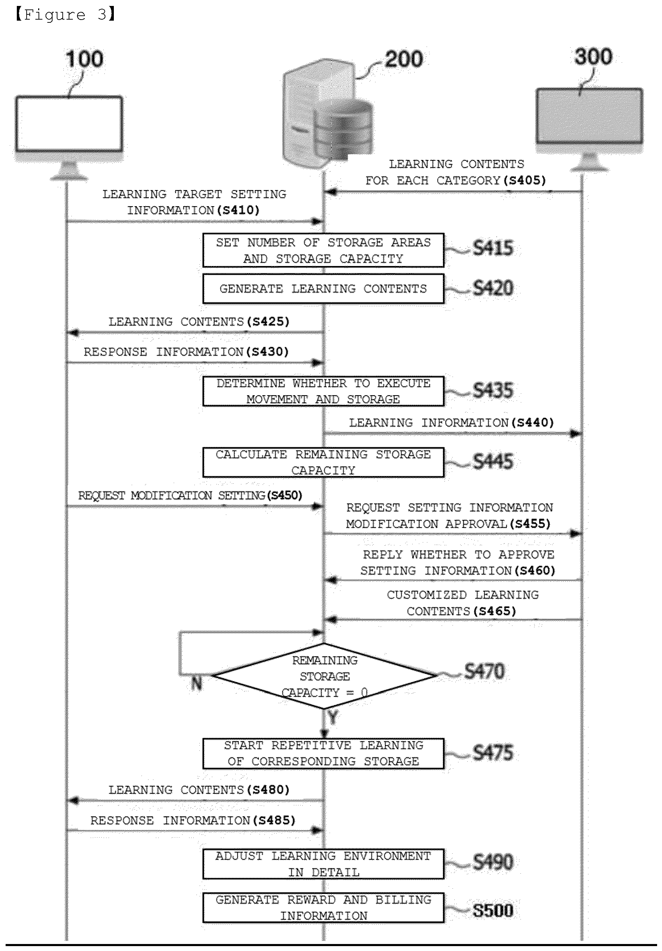

FIG. 3 is a signal flow diagram illustrating a process of executing the learning characteristics analysis and learning environment adjustment method using artificial intelligence according to an embodiment of the present invention. Hereinafter, the process of executing the learning characteristics analysis and learning environment adjustment method using artificial intelligence according to an embodiment of the present invention will be described with reference to FIGS. 1 to 3.

The learning contents for each learning object category are stored in the storage unit 230 of the service providing server 200. In implementing the present invention, the service providing server 200 may receive and store the learning contents for each category from the manager terminal 300 (S405).

Meanwhile, in implementing the present invention, the learning contents stored in the storage unit 230 may be structured in the form of a memo-type learning card on which contents to be well-acquainted according to the progress of learning are recorded, or structured in the form of a problem-type learning card on which problems related to the learning object contents are recorded.

In addition, when the learning contents are structured in the form of the problem-type learning card, it is preferable that correct answer information corresponding to the problem recorded on the problem-type learning card is stored in the storage unit 230 of the service providing server 200.

Meanwhile, as a learner selects a learning category (e.g., middle school English) through the application program installed on the learner terminal 100, the service providing server 200 may receive category selection information from the learner terminal 100.

In addition, the learner terminal 100 may transmit learning target setting information including a target learning period and a target learning amount input by a learner to the service providing server 200 along with category selection information (S410).

Accordingly, the service providing server 200 may set the number of the plurality of storage areas, storage capacities of each storage area, and the repetitive learning cycle in the individual storage space allocated to the account of the corresponding learner, based on the category selection information and target learning period information received from the learner terminal 100 (S415).

To this end, the storage unit 230 of the service providing server 200 may store the number N of storage areas (i.e., number of times of repetitive learning) according to the learning object category and target learning period P, each storage capacity (e.g., the storage limit of the learning card), and setting information for the repetitive learning cycle T, as shown in Table 1 below.

**[Table 1]**

| Category | P | N | Learning card storage limit for each storage area | T |
|---|---|---|---|---|
| Elementary English | 1 month | 3 | 1(100), 2(100), 3 (unlimited) | 1 week |
| Elementary English | 2 months | 4 | 1(100), 2(100), 3(200), 4 (unlimited) | 2 weeks |
| Middle School English | 1 month | 5 | 1(100), 2(100), 3(200), 4(400), 5 (unlimited) | 1 week |
| Middle School English | 2 months | 5 | 1(100), 2(100), 3(200), 4(400), 5 (unlimited) | 2 weeks |
| High School English | 1 month | 6 | 1(100), 2(100), 3(200), 4(400), 5(400), 6(unlimited) | 1 week |
| High School English | 2 months | 7 | 1(100), 2(100), 3(200), 4(400), 5(400), 6(800), 7 (unlimited) | 2 weeks |

In addition, in implementing the present invention, the service providing server 200 may set the number of the plurality of storage areas, the storage capacities of each storage area, and the repetitive learning cycle in the individual storage space allocated to the account of the corresponding learners, based on the category selection information and target learning amount information (e.g., 100 English words) received from the learner terminal 100 (S415).

To this end, the storage unit 230 of the service providing server 200 may store the number N of storage areas according to the learning object category and target learning amount S, each storage capacity (e.g., the storage limit of the learning card), and the setting information for the repetitive learning cycle T, as shown in Table 2 below.

**[Table 2]**

| Category | S | N | Learning card storage limit for each storage area | T |
|---|---|---|---|---|
| Elementary English | 100 pieces | 3 | 1(100), 2(100), 3 (unlimited) | 2 weeks |
| Elementary English | 200 pieces | 4 | 1(100), 2(100), 3(200), 4 (unlimited) | 2 weeks |
| Middle School English | 300 pieces | 5 | 1(100), 2(100), 3(200), 4(400), 5 (unlimited) | 2 weeks |
| Middle School English | 400 pieces | 5 | 1(100), 2(100), 3(200), 4(400), 5 (unlimited) | 1 week |
| High School English | 500 pieces | 6 | 1(100), 2(100), 3(200), 4(400), 5(400), 6(unlimited) | 1 week |

According to the present invention, a learner may directly participate in setting the learning environment, such as the repetitive learning cycle and repetitive learning amount, by inputting the target learning period and target learning amount through the learner terminal 100.

In addition, the service providing server 200 may store a learning card (or learning card corresponding to the learning amount selected by the learner among all learning cards corresponding to the category selected by the learner) corresponding to the category selected by the learner among the learning cards stored in the common storage space of the storage unit 230 as much as the storage limit of the first storage area among the plurality of storage areas provided in the individual storage space of the learner, thereby generating the learning contents for the learner (S420).

Meanwhile, when a learning start time (e.g., 5 p.m.) that the service providing server 200 receives and stores from the learner terminal 100 arrives by selecting, by a learner, the learning together with the learning object category in the above-described step S410, the service providing server 200 sequentially transmits the learning cards stored in the first storage area to the learner terminal 100 (S425).

Accordingly, as a learner who has confirmed the contents of the learning card through the learner terminal 100 inputs the response information for the contents of the learning card to the application program installed on the learner terminal 100, the service providing server 200 sequentially receives the response information of the learner from the learner terminal 100 (S430).

Specifically, in the case where learning card is the memo-type learning card, when it is determined that the learner is sufficiently acquainted with the contents of the learning card within a predetermined time limit (e.g., 1 minute), the learner selects the 'full knowledge complete' button, and when it is determined that the learner is not sufficiently acquainted with the contents of the learning card within the limited time, the learner selects 'full knowledge incomplete' button, so the learner may input the response information to the learner terminal 100.

In addition, when the learning card is the problem-type learning card, the learner may input the response information to the learner terminal 100 by inputting an answer to a problem on the corresponding learning card.

Meanwhile, the calculation unit 250 of the service providing server 200 determines whether to execute the movement and storage of the corresponding learning card from the first storage area to the second storage area based on the response information of the learner on the learning card transmitted to the learner terminal 100 (S435).

Specifically, in the case where the learning card is the memo-type learning card, the calculation unit 250 of the service providing server 200 may execute the movement and storage (i.e., deletion from the first storage area and storage in the second storage area) of the corresponding learning card from the first storage area to the second storage area when the response information is 'full knowledge complete', and may maintain the storage state in the first storage area where the learning card is previously stored without moving and storing the corresponding learning card when the response information is 'full knowledge incomplete' or the response information is not received from the learner terminal 100 within a predetermined time limit.

In addition, in the case where the learning card is the problem-type learning card, the calculation unit 250 of the service providing server 200 may move and store (i.e., deletion from the first storage area and storage in the second storage area) the corresponding learning card from the first storage area to the second storage area when the response information received from the learner terminal 100 and the correct answer information stored in association with the corresponding learning card are compared and match, and maintain the storage state in the first storage area where the learning card is previously stored without moving and storing the learning card when the response information and the correct answer information mismatch.

In this way, first-round learning is completed as the sequential transmission of the plurality of learning cards stored in the first storage area and the reception of the response information for each learning card are completed.

As such, in implementing the present invention, when the sequential transmission of the learning cards stored in the storage area where the sequential transmission of the learning cards is performed and the reception of the response information for each learning card is completed, it is preferable for the service providing server 200 to complete the learning of the corresponding round.

Meanwhile, in implementing the present invention, the service providing server 200 may transmit the learning information of the learner, which includes the learning card transmitted to the learner during the execution of the first-round learning, the response information for each learning card, and total execution ratio information of the movement and storage according to each response information, to the manager terminal 300 in charge of the learning of the learner (S440).

In this way, after the first-round learning is completed, when the repetitive learning cycle (e.g., 2 days) that the service providing server 200 receives and stores from the learner terminal 100 arrives, the service providing server 200 selects the learning together with the learning object category in the above-described step S410 to further store, in the first storage area, the learning card corresponding to the category selected by the learner among the learning cards stored in the common storage space of the storage unit 230 as much as the remaining storage limit of the first storage area to generate second-round learning contents and then repetitively execute the above-described steps S425 to S440.

In addition, the service providing server 200 may calculate the remaining storage capacity in the second storage area along with the execution of the movement and storage from the first storage area to the second storage area (S445), and transmit a guidance message (for example, 5 sheets of learning cards may currently additionally be stored in the second storage area, and when the storage capacity of the second storage area is exhausted, the learning in the first storage area is stopped, and at the same time, the transmission of the learning card stored in the second storage area starts.) on the remaining storage capacity information calculated in this way to the learner terminal 100.

Meanwhile, the learner who has confirmed the guidance message may input a request to modify the number of storage areas and storage capacity set in the above-described step S415 through the learner terminal 100 (S450).

For example, a learner who wants to postpone the start of the repetitive learning in the second storage area and continue the learning in the first storage area may modify and set (e.g., 100 -> 200) the storage capacity of the second storage area, and a learner who does not want unnecessary repetitive learning due to the excessive number of storage areas may input a request to modify and set (e.g., 7 → 5) the number of storage areas.

In addition, in implementing the present invention, the service providing server 200 may transmit a setting information modification approval request including the modification setting request received from the learner terminal 100 in the above-described step S445 to the manager terminal 300 (S455).

Accordingly, when the manager may input a result (Y/N) of determining whether to approve modification of setting information based on the learning information of the corresponding learner received from the service providing server 200 in the above-described step S440 to the manager terminal 300, the service providing server 200 may execute the modification setting based on the reply information (Y/N) regarding whether to approve the modification of the setting information received from the manager terminal 300 to grant approval authority for the modification settings to the manger (S460).

In addition, the manger may transmit customized learning contents for the corresponding learner to the service providing server 200 through the manager terminal 300 based on the learning information of the corresponding learner received from the service providing server 200 in the above-described step S440 (S465), and thus, the service providing server 200 additionally stores the customized learning contents received from the manger terminal 300 in the first learning area of the corresponding learner as much as the remaining storage limit of the first storage area in preference to the learning contents previously stored in the service providing server 200, thereby generating the customized learning contents for the learner and then repetitively executing the above-described steps S425 to S440.

Meanwhile, the calculation unit 250 of the service providing server 200 calculates the remaining storage capacity in the second storage area and determines whether the remaining storage capacity in the second storage area is completely exhausted (S470), stops transmitting the learning card stored in the first storage area when the remaining storage capacity in the second storage area is completely exhausted, and starts the repetitive learning in the second storage area by sequentially transmitting the learning cards stored in the second storage area to the learner terminal 100 (S475).

Specifically, the service providing server 200 first sequentially transmits the plurality of learning cards that are accumulatively moved and stored in the second storage area to the learner terminal 100 according to the storage order through the execution of the above-described step S445, so it is preferable that the service providing server 200 first performs the repetitive learning on the learned learning cards (S480).

As the learner inputs response information for the learning card stored in the second storage area to the learner terminal 100, the calculation unit 250 of the service providing server 200 repetitively executes the movement and storage from the second storage area to the third storage area and the related procedures in the same manner as the above-described steps S435 to S450 based on the response information received from the learner terminal 100 (S485).

Specifically, the service providing server 200 may stop transmitting the learning card stored in the second storage area when the remaining storage capacity in the third storage area is completely exhausted, and start the repetitive learning in the third storage area by sequentially transmitting the learning card stored in the third storage area to the learner terminal 100.

In implementing the present invention in this way, the service providing server 200 stops transmitting the learning card stored in an N-1th storage area when the remaining storage capacity in an N-th storage area is completely exhausted, and preferentially starts the repetitive learning in the N-th storage area by sequentially transmitting the learning cards stored in the N-th storage area to the learner terminal 100, thereby maximize the learning contents processed into long-term memory through repeated learning.

In addition, in implementing the present invention, when the service providing server 200 starts learning of a next round after learning of a specific round is completed, it is preferable that the learning contents are additionally stored in the first storage area as limited as the remaining storage capacity of the first storage area until all the learning contents related to the corresponding category stored in the storage unit 230 are exhausted, and then the learning cards stored in the first storage area are sequentially transmitted and start, but when all the learning contents related to the corresponding category stored in the storage unit 230 are exhausted, it is preferable that the storage area where the learning card is stored among a plurality of storage areas is extracted and then the learning cards stored in the storage area with the earliest arrangement order among the extracted storage areas are sequentially transmitted and start.

The repetitive learning through the sequential movement and storage in the plurality of storage areas as described above is repeatedly executed until all the learning cards related to the corresponding category provided from the service providing server 200 are stored in the last storage area, thereby supporting the long-term memory of the learning contents.

Meanwhile, in implementing the present invention, the service providing server 200 resets the number of storage areas, the storage capacity, and the repetitive learning cycle set in the above-described step S415 based on the various learning information of the learner as described above, thereby adjusting the learning environment of the learners in detail (S490).

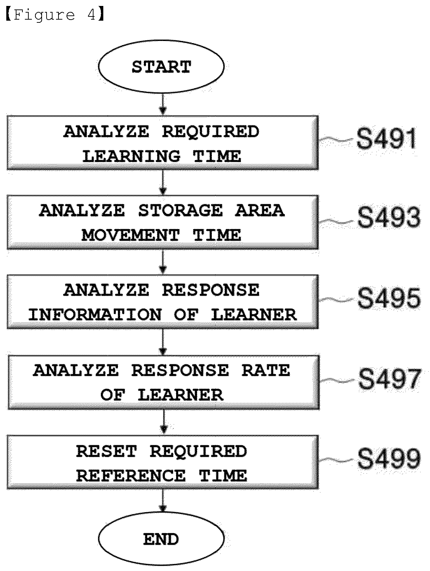

FIG. 4 is a procedure flowchart illustrating a detailed process of a learning characteristics analysis method using artificial intelligence according to an embodiment of the present invention. Hereinafter, the detailed process of the learning characteristics analysis method using artificial intelligence according to an embodiment of the present invention will be described with reference to FIG. 4.

First, the calculation unit 250 of the service providing server 200 may measure and analyze the time (i.e., time required for the first-round learning in the first storage area) required from the time the learning contents stored in the first storage area are first transmitted to the learner terminal 100 until both the sequential transmission of the plurality of learning cards stored in the first storage area and the reception of the response information for each learning card are completed (S491).

Specifically, the calculation unit 250 of the service providing server 200 may reset storage capacity of storage areas (excluding the last storage area) following the second storage area when the time required for the first-round learning exceeds the required predetermined reference time (e.g., 30 minutes), and reset the storage capacity of each storage area so that the storage capacity of each storage area is inversely proportional to the excess time compared to the reference time required for the first-round learning, so when a learning rate of a learner is slow, a repetitive learning amount for each round may be reduced.

In addition, the calculation unit 250 of the service providing server 200 may reset the storage capacity of storage areas (excluding the last storage area) following the second storage area when the time required for the first-round learning is less than the required predetermined reference time (e.g., 30 minutes), and reset the storage capacity of each storage area so that the storage capacity of each storage area is proportional to the insufficient amount (absolute value) compared to the reference time required for the first-round learning, so when a learning rate of a learner is fast, the repetitive learning amount for each round may increase.

Meanwhile, in implementing the present invention, the reference time required for the learning for each round may be included in the learning target setting information received from the learner terminal 100 in the above-described step S410.

In addition, the calculation unit 250 of the service providing server 200 may reset the repetitive learning cycle of the corresponding learner when the time required for the first-round learning exceeds the required predetermined reference time (e.g., 30 minutes), and reset the repetitive learning cycle so that the repetitive learning cycle is inversely proportional to the excess time compared to the reference time required for the first-round learning, so when the learning rate of the learner is slow (i.e., when the memory in the repetitive learning of the learner is not clear), the repetitive learning cycle may be reduced.

In addition, the calculation unit 250 of the service providing server 200 may reset the repetitive learning cycle of the corresponding learner when the time required for the first-round learning is less than the required predetermined reference time (e.g., 30 minutes), and reset the repetitive learning cycle so that the repetitive learning cycle is proportional to the insufficient amount (absolute value) compared to the reference time required for the first-round learning, so when the learning rate of the learner is fast (i.e., when the memory in the repetitive learning of the learner is clear), the repetitive learning cycle may increase.

According to the present invention, by analyzing the individual learning characteristics of the learner, it is possible to provide an optimized review interval for each individual.

In addition, the calculation unit 250 of the service providing server 200 may measure and analyze the time (i.e., 'storage area movement time' that is the time required from the start of learning in the first storage area to meeting the learning start requirements in the second storage area) required from the time the learning contents stored in the first storage area are first transmitted to the learner terminal 100 until the time when the remaining storage capacity of the second storage area is determined to be 0 in the above-described step S470 (S493).

Specifically, the calculation unit 250 of the service providing server 200 may reset storage capacity of storage areas (excluding the last storage area) following a third storage area when the storage area movement time exceeds the required predetermined reference time (e.g., 2 weeks), and reset the storage capacity of each storage area so that the storage capacity of each storage area is inversely proportional to the excess time compared to the reference time of the storage area movement time, so when the repetitive learning progress of the learner is slow, the repetitive learning amount for each round may be reduced.

In addition, the calculation unit 250 of the service providing server 200 may reset storage capacity of storage areas (excluding the last storage area) following the third storage area when the storage area movement time is less than the predetermined reference time (e.g., 2 weeks), and reset the storage capacity of each storage area so that the storage capacity of each storage area is proportional to the insufficient amount (absolute value) compared to the required reference time of the storage area movement time, so when the repetitive learning progress of the learner is fast, the repetitive learning amount for each round may increase.

In implementing the present invention, the reference time required may also be included in the learning target setting information received from the learner terminal 100 in the above-described step S410.

In addition, the calculation unit 250 of the service providing server 200 may reset the repetitive learning cycle of the corresponding learner when the storage area movement time exceeds the required predetermined reference time (e.g., 2 weeks), and reset the repetitive learning cycle so that the repetitive learning cycle is inversely proportional to the excess amount compared to the required reference time of the storage area movement time, so when the repetitive learning progress of the learner is slow (e.g., when the learner repeatedly gets the same problem wrong), the repetitive learning cycle may be reduced.

In addition, the calculation unit 250 of the service providing server 200 may reset the repetitive learning cycle of the corresponding learner when the storage area movement time is less than the required predetermined reference time (e.g., 2 weeks), and reset the repetitive learning cycle so that the repetitive learning cycle is proportional to the insufficient amount (absolute value) compared to the required reference time of the storage area movement time, so when the repetitive learning progress of the learner is fast, the repetitive learning cycle may increase.

In addition, in determining whether to execute the movement and storage in the above-described step S435, the service providing server 200 may calculate 'accumulated number of times of incorrect answers' which is the number of times calculated by cumulating the number of times that the response information of the learner for the same learning card is 'full knowledge incomplete' or the response information mismatches the correct answer information, and analyze the 'accumulated number of times of incorrect answers', thereby adjusting the learning environment for the learner in detail (S495).

Specifically, the calculation unit 250 of the service providing server 200 may reset the storage capacity of each storage area so that the storage capacity of each storage area is inversely proportional to the accumulated number of times of incorrect answers, so the more the repeated incorrect answers to the same problem, the smaller the repetitive learning amount for each round, and reset the repetitive learning cycle so that the repetitive learning cycle is inversely proportional to the number of times of incorrect answers, so the more the repeated incorrect answers to the same problem, the shorter the repetitive learning amount for each round.

In addition, the calculation unit 250 of the service providing server 200 may measure, for each learning card, the response time which is the time required from the time the learning contents (specific learning card) are transmitted in the above-described steps S425 and S480 until the time the response information (response to the corresponding learning card) is received in the above-described steps S430 and S485, and calculate an average value of the response time, thereby analyzing the response rate of the learner and adjusting the learning environment in detail based on the analyzed response rate (S497).

Specifically, the calculation unit 250 of the service providing server 200 may reset the storage capacity of each storage area so that the storage capacity of each storage area is inversely proportional to the average value of the required response time, so the repetitive learning amount for each round is reduced for learners with longer required response time, and reset the repetitive learning cycle so that the repetitive learning cycle is inversely proportional to the average value of the required response time, so the repetitive learning cycle may be shortened for learners with longer required response time.

In addition, in implement the present invention, the calculation unit 250 of the service providing server 200 may reset each required reference time in the above-described steps S491 and S493 so that each required reference time is proportional to the accumulated number of times of incorrect answers in the above-described step S495 and the average value of the required response time in the above-described step S497, so the required reference time may increase for learners who repeat incorrect answers to the same problem multiple times and for learners who require a long time to respond (S499).

In addition, in implementing the present invention, the service providing server 200 may repeatedly execute the detailed learning environment adjustment process as described above when the learning for each round is completed or when the learning start requirements for each storage area are met, and may also limit the number of times of the detailed learning environment adjustment according to the learning object category.

Specifically, the service providing server 200 may receive and store the number of times of the detailed learning environment adjustment limits in the corresponding category together with the learning contents for each learning object category from the manager terminal 300 in the above-described step S405, and execute the detailed learning environment adjustment by limiting the number of times (e.g., 5 times) of the adjustments for each learning object category based on the received and stored number of times of the detailed learning environment adjustment limits.

In addition, for this purpose, the storage unit 230 of the service providing server 200 may store information on the allowable number of times of adjustments for each learning object category as shown in Table 3 below.

**[Table 3]**

| Category | Allowable number of times of adjustment |
|---|---|
| Elementary English A | 4 |
| Elementary English B | 5 |
| Middle School English A | 6 |
| Middle School English B | 7 |
| High School English A | 8 |
| High School English B | 9 |

In this way, in the present invention, by differentially setting the allowable number of times of the detailed learning environment adjustment according to the characteristics such as the difficulty of the learning object category, each learning environment may be adjusted in detail by reflecting the characteristics of the learning object category.

In addition, in implementing the present invention, the calculation unit 250 of the service providing server 200 may equally apply results of detailed learning environment adjustment for a specific learning object category (e.g., middle school English A) to the learning environment in other learning object categories (e.g., middle school English B) of the corresponding learner as in the above-described steps S491 to S499 to initially set the number of storage areas, the storage capacity, and the repetitive learning cycle for other learning object categories in the above-described step S415, so the results of analyzing the learning characteristics for the learner as illustrated in FIG. 4 may be initially applied to the learning of other categories of the corresponding learner.

Meanwhile, when setting the learning environment in other learning object categories by applying the results of analyzing the previous learning characteristics of the corresponding learner, the service providing server 200 may transmit a learning environment automatic setting approval request message (e.g., would you like to apply the learning environment according to the results of analyzing the learning characteristics in the previous learning?) to the learner terminal 100, and may apply the results of analyzing the previous learning characteristics when receiving the approval message from the learner terminal 100 to set the learning environment in other learning object categories.

In addition, in implementing the present invention, the calculation unit 250 of the service providing server 200 may equally apply the number of storage areas, the storage capacity, and each adjustment rate in the repetitive learning cycle (e.g., 10% increase or decrease) by the detailed learning environment adjustment described in FIG. 4 to the number of storage areas, the storage capacity, and the repetitive learning cycle set based on Tables 1 and 2 in the above-described step S415, so the result of analyzing the previous learning characteristics of the corresponding learner may be applied to set the learning environment in other learning object categories.

As described above, according to the present invention, it is possible to not only enable precise analysis of individual learning characteristics of learners, such as learning ability and a level of learning achievement during repetitive learning, through the artificial intelligence, but also allow learning environment of the learners to be actively set by reflecting the individual learning characteristics of the learners analyzed through artificial intelligence.

Specifically, in the present invention, when the service providing server 200 analyzes the individual learning characteristics of the learner through the artificial intelligence, machine learning may be used. To this end, the storage unit 230 of the service providing server 200 may store the learning model for analyzing the required learning time, the storage area movement time, the response information of the learner, and the response rate.

In addition, the learning model in the present invention may be composed of an operation algorithm that analyzes the learning characteristics of the learner based on the required learning time, the storage area movement time, the response information of the learner, and the response rate in the calculation unit 250 as described above and adjusts the repetitive learning cycle of the learner and the one-time repetitive learning amount based on the analysis results, and may also be formed as a neural network of various structures, and may be formed from a neural network having various structures.

Specifically, this learning model may be machine-learned based on the required learning time, the storage area movement time, the response information of the learner, and the response rate that are accumulated and stored in the storage unit 230, and the repetitive learning cycle generated based on this, and the adjustment value of the one-time repetitive learning amount.

Meanwhile, in implementing the present invention, the service providing server 200 may generate reward information for a learner based on the information on the total learning period or total number of learning rounds required until all the learning cards related to the corresponding category are stored in the last storage area (S500).

Specifically, the calculation unit 250 of the service providing server 200 may encourage learners who have completed repetitive learning for long-term memory within a short period of time by generating learning reward points so that the learning reward points are inversely proportional to the total number of learning rounds.

In addition, the calculation unit 250 of the service providing server 200 may set the storage capacity so that the storage capacity is inversely proportional to the total number of learning rounds executed by the learner in the previous repetitive learning completion process when resetting the number of storage areas and the storage capacity in the above-described step S415 for learners who later restart the repetitive learning process, set the number of storage areas so that the number of storage areas is proportional to the total number of learning rounds, set the storage capacity so that the storage capacity is proportional to the total ratio of correct answers in the previous repetitive learning completion process, and set the number of storage areas so that the number of storage areas is inversely proportional to the total ratio of correct answer, thereby providing the customized long-term support service that takes into account the learning capabilities of the learner.

Meanwhile, in implementing the present invention, the calculation unit 250 of the service providing server 200 may generate billing information of a learner so that the billing information of the learner is proportional to the number of learning cards stored in the last storage area at a use end time of the service according to the present invention, so it is possible to allow the learner to pay a reasonable fee in proportion to his/her own learning performance (S500).

In addition, in implementing the present invention, the calculation unit 250 of the service providing server 200 may generate the billing information of the learner so that the billing information of the learner is proportional to the total learning period or total number of learning rounds required until all the learning cards related to the corresponding category is stored in the last storage area, thereby encouraging learners to complete repetitive learning early through diligent learning while charging a usage fee proportional to the service use period and use frequency.

In addition, in implementing the present invention, programs that execute the method of analyzing learning characteristics and adjusting the learning environment using artificial intelligence according to the present invention may be installed on the service providing server 200 according to the present invention or may be recorded on various computer-readable recording media or stored on a server that transmits programs through a network.

In addition, the programs according to the present invention may be distributed in a computer system connected to a network, and computer-readable code may be stored and executed in a distributed manner, and functional programs, codes, and code segments for implementing the present invention can be easily understood by those skilled in the art to which the present invention pertains.

Meanwhile, the order between the above-described steps is merely an example and is not limited thereto. That is, the order between the above-described steps may be mutually changed, and some of these steps may be executed simultaneously or deleted.

Terms used in the present invention are used only in order to describe specific exemplary embodiments rather than limiting the present invention. Singular forms are intended to include plural forms unless the context clearly indicates otherwise. It will be further understood that the terms "comprise" or "have" used in this specification, specify the presence of stated features, steps, operations, components, parts mentioned in this specification, or a combination thereof, but do not preclude the presence or addition of one or more other features, numerals, steps, operations, components, parts, or a combination thereof.

Although the exemplary embodiments and application examples of the present disclosure have been illustrated and described hereinabove, the present disclosure is not limited to the above-mentioned specific exemplary embodiments and application examples, but may be variously modified by those skilled in the art to which the present disclosure pertains without departing from the scope and spirit of the present disclosure as disclosed in the accompanying claims. These modifications should also be understood to fall within the scope of the present disclosure.

### [Description of reference numerals]

100: Learner terminal, 200: Service providing server, 300: Manager terminal

## Claims

1. A learning characteristics analysis and learning environment adjustment method using artificial intelligence, comprising:
(a) transmitting, by a service providing server, learning contents stored in a first storage area among a plurality of storage areas to a learner terminal;
(b) receiving, by the service providing server, response information of a learner on the learning contents from the learner terminal;
(c) determining, by the service providing server, whether to execute movement and storage of the learning contents from the first storage area to a second storage area based on the response information of the learner; and
(d) analyzing, by the service providing server, learning characteristics of the learner based on the response information of the learner.

2. The learning characteristics analysis and learning environment adjustment method of claim 1, further comprising:
(e) adjusting, by the service providing server, at least one of repetitive learning cycle of the learner and a one-time repetitive learning amount based on a result of analyzing the learning characteristics of the learner.

3. A service providing server, comprising:
a transmitting unit that transmits learning contents stored in a first storage area among a plurality of storage areas to a learner terminal;
a receiving unit that receives response information of a learner on the learning contents from the learner terminal; and
a calculation unit that allows the service providing server to analyze learning characteristics of the learner based on the response information of the learner.

4. The service providing server of claim 3, wherein the calculation unit adjusts at least one of repetitive learning cycle of the learner and a one-time repetitive learning amount based on a result of analyzing the learning characteristics of the learner.
